# EUROPEAN PATENT SPECIFICATION

(11) **EP 2 742 294 B1**
(45) Date of publication and mention of the grant of the patent: **05.05.2021**
(21) Application number: 11743452.2
(22) Date of filing: 10.08.2011
(51) Int. Cl.: F24C 7/08, F24C 15/32, A23L 5/10

(54) **METHOD OF OPERATING A COMMERCIAL COOKING DEVICE AS WELL AS COMMERCIAL COOKING DEVICE, IN PARTICULAR COMBI STEAMER**
VERFAHREN ZUM BETRIEB EINER GEWERBLICHEN KOCHVORRICHTUNG SOWIE GEWERBLICHE KOCHVORRICHTUNG, INSBESONDERE HEISSLUFTDÄMPFER
PROCÉDÉ DE FONCTIONNEMENT D'UN DISPOSITIF DE CUISSON COMMERCIAL, ET DISPOSITIF DE CUISSON COMMERCIAL, ET, EN PARTICULIER, FOUR À VAPEUR MIXTE

(43) Date of publication of application: 18.06.2014
(73) Proprietor: Convotherm-Elektrogeräte GmbH, D-82436 Eglfing (DE)
(72) Inventor: WILD, Hannes, 82418 Riegsee (DE); NITZSCHE, Martin, 82380 Peissenberg (DE)
(74) Representative: Hoefer & Partner Patentanwälte mbB
(86) International application number: PCT/EP2011/004008
(87) International publication number: WO 2013/020568

(56) References cited:
- EP-A1- 0 463 657
- WO-A2-2008/047397
- GB-A- 1 455 838
- JP-A- 2 178 520
- JP-A- 9 269 127
- JP-A- 2010 038 403
- US-A- 3 861 866
- US-A1- 2002 014 875

## Description

The present invention concerns a method of operating a commercial cooking device according to the preamble part of claim 1 as well as a commercial cooking device, in particular a combi steamer, according to the preamble part of claim 4. Such a method and cooking device is known from US 3 861 866 A or WO 2008/047397 A2

EP 0 463 657 discloses an appliance for the preparation of meat wherein after grilling has been completed the food product is kept hot.

Another commercial cooking device (see e.g. JP 2 178 520 A, GB 1 455 838 A or US 2002/014875 A1) comprises a cooking chamber that can be opened and closed by a door. After a cooking process during which a cooking program for the food products to be cooked is performed, is finished the door of the cooking chamber is immediately opened. The door opening process triggers a sensor (e.g. a read switch, a microprocessor or so on) and the motor of the fan for circulating hot air and/or steam within the cooking chamber will be stopped either directly or via the control means of the cooking device. The inertia of the fan wheel, however, results in the problem that the fan wheel will still run for a certain period of time until a standstill while the door is already open. Consequently, a high cooking chamber temperature drop, a high steam-, smoke- and/or odour-escape will take place having the negative effects of a risk of scalding, a higher impact to the kitchen exhaust system and a wider spread of grease what results in a contamination of kitchen components and can make the kitchen floor slippery. Moreover, because of the high and quick temperature drop, food that is still located in the cooking chamber may not reach the correct core temperature what may be a food safety issue.

It is, therefore, an object of the present invention to provide a method of operating a commercial cooking device as well as a commercial cooking device, in particular a combi steamer, that are able to overcome the before-explained drawbacks of the prior art.

The solution of this object is achieved by the features of claim 1 and 4, respectively.

According to the principles of the present invention, the motor of the cooking chamber driving the fan will be stopped before the cooking program for the food products that are loaded in the cooking chamber is finalized. So, the motor and the fan the motor is driving are fully stopped when the door of the cooking chamber is opened.

So, as a main aspect, the method and commercial cooking device according to the present invention result in the advantage that the climate within the cooking chamber is not remarkably influenced when the door is opened as at this point of time the fan has reached a standstill so that it cannot blow hot air and/or steam out of the cooking chamber. This, of course, also results in a reduced cooking temperature drop and a safe and correct termination of the cooking mode for the associated food products that are loaded into the cooking chamber. This aspect is especially important for a so-called rolling loading and unloading of food products what means that a plurality of products that are loaded into the cooking chamber and that can be cooked with the same cooking program have to be unloaded at different points of time as the respective cooking period may be different.

The further advantage that can be achieved with the principles of the present invention is a reduction of a risk of scalding and a minimization of the steam load in the kitchen in which the commercial cooking device is located.

In other words, before the cooking program is finished, the motor of the fan of the cooking chamber will be stopped usually a couple of seconds before the predetermined cooking time of the respective cooking program is elapsed.

If the respective cooking program is based on a core temperature mode, the motor will be stopped at a point of time that corresponds to a predetermined amount of degrees before reaching the target core temperature.

Although, for the purpose of reducing the danger of scalding, EP 0 937 400 B1 suggests a removal of dampness prior to the termination of the baking or cooking process, this necessitates the operation of the motor and the fan as otherwise the removal of dampness would not be possible.

The dependent claims contain advantageous embodiments of the method according to the present invention.

So, the motor can be stopped by either actuating a motor brake or by interrupting the electric power supply to the motor.

According to the invention, after the cooking time is elapsed or the desired core temperature is reached, and if after a certain period of time the door of the cooking chamber is not opened, the motor of the fan and the heating elements of the cooking chamber are reactivated.

The predetermined period of time at which the motor is stopped can be adjusted according to different parameters, as e.g. the product load of the cooking chamber, the cooking mode or cooking program and/or the cooking temperature as well as the core temperature.

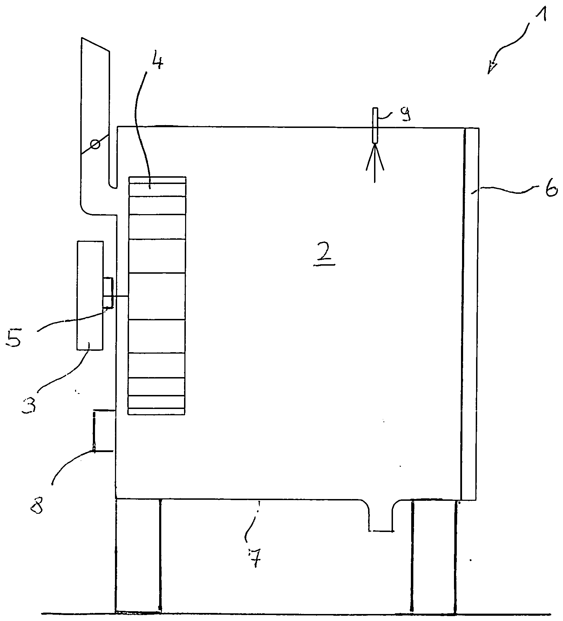

Further details, advantages and features of the present invention will become apparent from the following description of the single figure of the drawings.

This figure shows a commercial cooking device 1 in a highly simplified way although, of course, the cooking device comprises all usual components and functions of such cooking devices that, however, are not necessary in order to describe the principles of the present invention.

Cooking device 1 comprises a cooking chamber 2 that is located in a housing 7. The cooking chamber 2 of the housing 7 can be opened and closed by means of a door 6 in order to load and unload food products into and out of the cooking chamber 2.

The figure shows, moreover, a fan 4 located within the cooking chamber 2. Fan 4 is driven by a motor 3 that, according to the preferred embodiment of the figure, can be equipped with a motor brake 5. Finally the cooking device 1 comprises a control means 8 that is adapted to control all the components of the cooking device, especially the motor 3, its brake 5 (if provided), heating means (not shown) as well as a cleaning device that is represented by a nozzle 9.

According to the principles of the present invention, the method of operating said commercial cooking product 1 provides, as a first step, loading food products which can be of any kind into the cooking chamber 2 of the cooking device 1.

Thereafter, the associated cooking program or cooking mode with which the respective food products loaded in the cooking chamber 2 can be cooked is started. This start of the cooking product means that the motor 3 starts to run and that the fan within the cooking chamber 2 is driven. Of course, this start of the cooking program also means that the heating means and other components are operated enabling the performance of the respective cooking program.

The control means 8 controlling all these components and functions will, according to the principles of the present invention, stop the motor 3 at a predetermined period of time before the associated cooking program is finalized. This means, in other words, that the motor 3 and the fan 4 will be stopped first, and, thereafter, the cooking program will be finalized at a later point of time so that it is ensured that the motor 3 as well as the fan 4 have reached a standstill when the door 6 of the cooking chamber 2 is opened in order to unload the cooked food products.

In addition to the written disclosure of the invention, reference is explicitly made to the depiction of the commercial cooking device 1 according to the single figure of the drawings.

### List of References

1 cooking device
2 cooking chamber
3 motor
4 fan
5 motor brake
6 door
7 housing
8 control means
9 nozzle

## Claims

1. Method of operating a commercial cooking device (1) with the following method steps:
- loading food products into a cooking chamber (2) of the cooking device (1);
- starting an associated cooking program including starting to run a motor (3) of a fan (4) for circulating hot air and/or steam within the cooking chamber (2) for the purpose of cooking the food products; and
- stopping the motor (3) of the fan (4) at a predetermined period of time before the associated cooking program is finalized, ensuring that the motor (3) as well as the fan (4) have reached a standstill when a door (6) of the cooking chamber (2) is opened in order to unload the cooked food products, **characterized in**
- **that**, after the cooking time is elapsed or the desired core temperature is reached, and if after a certain period of time the door (6) of the cooking chamber (2) is not opened, the motor (3) of the fan (4) and heating elements of the cooking chamber (2) are reactivated.

2. Method according to claim 1, being **characterized in that** the motor (3) is stopped by actuating a motor brake (5).

3. Method according to claim 1, **characterized in that** the motor (3) is stopped by switching the motor (3) powerless.

4. Commercial cooking device (1), in particular combi steamer, comprising:
- a cooking chamber (2) located in a housing (7) and adapted to receive food products to be cooked according to an associated cooking program;
- a door (6) for opening and closing the cooking chamber (2);
- a motor (3) for driving the fan (4), wherein
- a control means (8) for controlling the cooking program
- is adapted to stop the motor (3) to a standstill a predetermined period of time before the associated cooking program is finalized, ensuring that the motor (3) as well as the fan (4) have reached a standstill when a door (6) of the cooking chamber (2) is opened in order to unload the cooked food products, and a fan (4) is disposed in the cooking chamber (2), **characterized in**
- **that** the control means for controlling the cooking program is adapted to, after the cooking time is elapsed or the desired core temperature is reached, and if after a certain period of time the door (6) of the cooking chamber (2) is not opened, to reactivate the motor (3) of the fan (4) and heating elements of the cooking chamber (2).

5. Cooking device according to claim 4, being **characterized in that** the motor (3) is equipped with a motor brake (5).

## Patentansprüche

1. Verfahren zum Betreiben eines gewerblichen Gargeräts (1) mit den folgenden Verfahrensschritten:
- Einbringen von Lebensmitteln in einen Garraum (2) des Gargeräts (1)
- Starten eines zugehörigen Garprogramms, das die Inbetriebnahme eines Motors (3) eines Gebläses (4) zum Umwälzen von Heißluft und/oder Dampf im Innern des Garraums (2) zum Zwecke des Garens der Lebensmittel umfasst; und
- Anhalten des Motors (3) des Gebläses (4) in einem vorbestimmten Zeitraum, bevor das zugehörige Garprogramm beendet ist, wobei sichergestellt wird, dass der Motor (3) sowie das Gebläse (4) einen Stillstand erreicht haben, wenn eine Tür (6) der Garkammer (2) geöffnet wird, um die gegarten Lebensmittel zu entnehmen, **dadurch gekennzeichnet,**
- **dass** nach Ablauf der Garzeit oder Erreichen der gewünschten Kerntemperatur, und wenn nach einer bestimmten Zeitdauer die Tür (6) der Garkammer (2) nicht geöffnet wird, der Motor (3) des Gebläses (4) und Heizelemente der Garkammer (2) wieder aktiviert werden.

2. Verfahren nach Anspruch 1, **dadurch gekennzeichnet, dass** der Motor (3) durch Betätigen einer Motorbremse (5) angehalten wird.

3. Verfahren nach Anspruch 1, **dadurch gekennzeichnet, dass** der Motor (3) durch Stromabschalten des Motors (3) angehalten wird.

4. Gewerbliches Gargerät (1), insbesondere Combi-Dampfgarer, umfassend:
- eine Garkammer (2), die in einem Gehäuse (7) angeordnet ist und zum Aufnehmen von Lebensmitteln eingerichtet ist, die gemäß einem zugehörigen Garprogramm gegart werden sollen;
- eine Tür (6) zum Öffnen und Schließen der Garkammer (2);
- einen Motor (3) zum Antreiben des Gebläses (4), wobei
- eine Steuereinrichtung (8) zum Steuern des Garprogramms
- dazu eingerichtet ist, den Motor (3) eine vorbestimmte Zeitdauer vor Beendigung des zugehörigen Garprogramms zum Stillstand zu bringen, wobei sichergestellt wird, dass der Motor (3) sowie das Gebläse (4) einen Stillstand erreicht haben, wenn eine Tür (6) der Garkammer (2) geöffnet wird, um die gegarten Lebensmittel zu entnehmen, und ein Gebläse (4) in der Garkammer (2) angeordnet ist, **dadurch gekennzeichnet,**
- **dass** die Steuereinrichtung zum Steuern des Garprogramms dazu eingerichtet ist, nach Ablauf der Garzeit oder Erreichen der gewünschten Kerntemperatur, und wenn nach einer bestimmten Zeitdauer die Tür (6) der Garkammer (2) nicht geöffnet wird, den Motor (3) des Gebläses (4) und Heizelemente der Garkammer (2) wieder zu aktivieren.

5. Gargerät nach Anspruch 4, **dadurch gekennzeichnet, dass** der Motor (3) mit einer Motorbremse (5) ausgestattet ist.

## Revendications

1. Procédé de fonctionnement d'un dispositif de cuisson commercial (1) avec les étapes du procédé suivantes :
- le chargement de produits alimentaires dans une chambre de cuisson (2) du dispositif de cuisson (1) ;
- le démarrage d'un programme de cuisson associé comportant un démarrage pour faire fonctionner un moteur (3) d'un ventilateur (4) pour faire circuler de l'air chaud et/ou de la vapeur à l'intérieur de la chambre de cuisson (2) dans le but de cuire les produits alimentaires ; et
- l'arrêt du moteur (3) du ventilateur (4) à une période de temps prédéterminée avant que le programme de cuisson associé ne soit finalisé, en s'assurant que le moteur (3) ainsi que le ventilateur (4) ont atteint un état de repos lorsqu'une porte (6) de la chambre de cuisson (2) est ouverte afin de décharger les produits alimentaires cuits, **caractérisé en ce que**
- après que le temps de cuisson s'est écoulé ou la température à cœur souhaitée est atteinte, et si après une certaine période de temps la porte (6) de la chambre de cuisson (2) n'est pas ouverte, le moteur (3) du ventilateur (4) et les éléments chauffants de la chambre de cuisson (2) sont réactivés.

2. Procédé selon la revendication 1, **caractérisé en ce que** le moteur (3) est arrêté en actionnant un frein de moteur (5).

3. Procédé selon la revendication 1, **caractérisé en ce que** le moteur (3) est arrêté par interruption de l'alimentation du moteur (3).

4. Dispositif de cuisson commercial (1), en particulier un four mixte à vapeur, comprenant :
- une chambre de cuisson (2) située dans un boîtier (7) et adaptée pour recevoir des produits alimentaires devant être cuits selon un programme de cuisson associé ;
- une porte (6) pour ouvrir et fermer la chambre de cuisson (2) ;
- un moteur (3) pour entraîner le ventilateur (4), dans lequel
- un moyen de commande (8) pour commander le programme de cuisson
- est adapté pour arrêter le moteur (3) jusqu'à un état de repos pendant une période prédéterminée avant que le programme de cuisson associé ne soit finalisé, en s'assurant que le moteur (3) ainsi que le ventilateur (4) ont atteint un état de repos lorsqu'une porte (6) de la chambre de cuisson (2) est ouverte afin de décharger les produits alimentaires cuits, et
un ventilateur (4) est disposé dans la chambre de cuisson (2), **caractérisé en ce que**
- le moyen de commande pour commander le programme de cuisson est adapté pour, après que le temps de cuisson s'est écoulé ou la température à cœur souhaitée est atteinte, et si après une certaine période de temps la porte (6) de la chambre de cuisson (2) n'est pas ouverte, réactiver le moteur (3) du ventilateur (4) et les éléments chauffants de la chambre de cuisson (2).

5. Dispositif de cuisson selon la revendication 4, **caractérisé en ce que** le moteur (3) est équipé d'un frein de moteur (5).
